# EUROPÄISCHE PATENTSCHRIFT

(11) **EP 3 214 923 B1**
(45) Veröffentlichungstag und Bekanntmachung des Hinweises auf die Patenterteilung: **18.03.2020**
(21) Anmeldenummer: 15791584.4
(22) Anmeldetag: 05.11.2015
(51) Int. Cl.: A01J 5/00, A01K 1/00, A01K 1/12

(54) **VERFAHREN UND VORRICHTUNG ZUM ZEITLICH VORGEBBAREN AUTOMATISCHEN MELKEN VON TIEREN**
METHOD AND DEVICE FOR AUTOMATIC MILKING OF ANIMALS AT A CONFIGURABLE TIME
PROCÉDÉ ET DISPOSITIF DE TRAITE AUTOMATIQUE D'ANIMAUX À DES INTERVALLES PRÉDÉFINISSABLES

(30) Priorität: 06.11.2014 EP 14192024
(43) Veröffentlichungstag der Anmeldung: 13.09.2017
(73) Patentinhaber: Lemmer Fullwood GmbH, 53790 Lohmar (DE)
(72) Erfinder: LEMMER, Jan-Eric, 53790 Lohmar (DE)
(74) Vertreter: dompatent von Kreisler Selting Werner - Partnerschaft von Patent- und Rechtsanwälten mbB
(86) Internationale Anmeldenummer: PCT/EP2015/075836
(87) Internationale Veröffentlichungsnummer: WO 2016/071459

(56) Entgegenhaltungen:
- WO-A1-2005/092085
- WO-A1-2008/003341
- NZ-A- 240 967

## Beschreibung

Die Erfindung betrifft eine Vorrichtung und ein Verfahren zum zeitlich vorgebbaren automatischen Melken ("Batch-Melken") von Flüssigkeit aus Eutern abgebenden Tieren einer Herde, nach den Ansprüchen 1 bzw. 4. Bei diesen Tieren handelt es sich insbesondere um Kühe. Beispiele für andere Tiere, für die die Vorrichtung eingesetzt werden kann, sind Ziegen oder Schafe.
Zum automatischen Melken von Kühen einer Herde werden in verstärktem Umfang Melkroboter eingesetzt. Die Idee dabei ist, dass Kühe im sogenannten freien oder im sogenannten selektiven Kuhverkehr selbsttätig einen Melkroboter aufsuchen. Diese beiden Konzepte haben sich in der Praxis grundsätzlich bewährt.
Nichtsdestotrotz kann es Gründe geben, eine gesamte Herde von Kühen oder Teile der Kuhherde zu einer Gruppe von Melkrobotern gesteuert zu führen, um auf diese Art und Weise zu beispielsweise festen Tageszeiten sämtliche Kühe der Herde bzw. einer Gruppe der Herde nacheinander zu melken. Auf diese Art und Weise werden auch solche Kühe gemolken, die von sich aus den Melkroboter (noch) nicht aufsuchen würden, obwohl sie gemolken werden sollten. Gründe hierfür können beispielsweise der Sättigungsgrad einer Kuh sein, die sich beispielsweise "satt" gefressen hat und sich daher durch das Lockfutter des Melkroboters nicht dazu verleiten lässt, den Melkroboter aufzusuchen. Ein anderer Grund kann sein, dass gerade während der Sommerzeit eine Kuh ihren Schattenplatz auf der Weide nur zögerlich verlassen will, obwohl sie eigentlich gemolken werden müsste.

Aus WO-A-2008/003341 ist eine Vorrichtung zum zeitlich vorgebbaren Melken von Kühen mittels Melkrobotern bekannt. Die zu melkende Herde befindet sich in einem mit einer Kuhtreibereinheit ausgestatteten Warteraum, dem eine Drehscheibe vorgelagert ist. Längs eines Umfangsteilbereichs der Drehscheibe befinden sich mehrere Melkroboter, denen die Kühe, die hintereinander aus dem Wartebereich heraus auf die Drehscheibe gelangen, automatisch zugeführt werden. Es findet also sozusagen eine Vereinzelung der Kühe statt, die somit einzeln und hintereinander zu den Melkrobotern transportiert werden.

Eine weitere bekannte Vorrichtung zum automatischen Zuführen von Kühen zu Melkrobotern ist aus US-A-2011/0308465 bekannt. Die Kühe werden mittels einer Kuhtreibereinheit aus einem Wartebereich über eine (Vereinzelungs-) Schleuse den Kammern einer sich an der Schleuse vorbeidrehenden Drehscheibe zugeführt, auf der sie automatisch gemolken werden.

In WO-A-2005/092085 ist ein Rundstall mit rotierender Kuhtreibereinheit beschrieben, die die Kühe zu einer Melkroboteranordnung treibt. Diese bekannte Drehkuhtreibereinheit lässt sich bei den Vorrichtungen nach WO-A-2008/003341 oder US-A-2011/0308465 nicht einsetzen, da bei diesen bekannten Vorrichtungen bereits translatorisch verfahrbare Kuhtreiber verwirklicht sind. Insbesondere bei der Vorrichtung nach WO-A-2008/003341 kann eine Drehkuhtreibereinheit vor den Melkrobotern auch deshalb nicht verwendet werden, weil die bei dieser bekannten Vorrichtung den Melkrobotern vorgelagerte Drehscheibe eine Kuhvereinzelungsfunktion erfüllt, was durch einen Drehkuhtreiber nicht realisiert werden kann. Bei der Vorrichtung nach US-A-2011/0308465 werden keine stehenden Melkroboter sondern ein Melkroboterkarussell verwendet, so dass die zusätzliche Anordnung einer Drehkuhtreibereinheit insoweit sinnlos wäre.

In DE-A-10 2004 036 128 und NZ-A-240967 sind weitere Beispiele für Kuhtreibereinheiten beschrieben.

Aufgabe der Erfindung ist es, das zeitlich vorgebbare und insoweit gesteuerte, automatische Melken von Flüssigkeit aus Eutern abgebenden Tieren einer Herde zu erleichtern.
Der Lösung dieser Aufgabe dienen erfindungsgemäß eine Vorrichtung gemäß Anspruch 1 und/oder ein Verfahren gemäß Anspruch 4.

Zur Lösung dieser Aufgabe wird mit der Erfindung gemäß einer weiteren Variante eine Vorrichtung zum zeitlich vorgebbaren automatischen Melken von Flüssigkeit aus Eutern abgebenden Tieren einer Herde, insbesondere von Kühen, vorgeschlagen, wobei die Vorrichtung versehen ist mit
- mehreren, auf einem Untergrund angeordneten Melkrobotern zum automatischem Melken von Tieren,
- wobei jeder Melkroboter einen Eingang und einen Ausgang und ein automatisch an das Euter eines Tieres ansetzbares Melkzeug aufweist,
- einem den Eingängen der Melkroboter vorgelagerten, eingegrenzten Wartebereich für die zu melkenden Tiere einer Herde,
- wobei der Wartebereich einen Zugang zum Zuführen der Tiere aus einem Aufenthaltsbereich, in welchem sich auch nicht zu melkende Tiere befinden, zum Wartebereich aufweist, und
- einer Tiertreibereinheit zum automatischen Treiben von sich im Wartebereich aufhaltenden Tieren zu den Eingängen von jeweils frei werdenden Melkrobotern,
- wobei die Melkroboter längs einer gekrümmten Linie, insbesondere einer zumindest Teilkreislinie, nebeneinander angeordnet sind,
- wobei die Eingänge der Melkroboter zu dem zumindest teilweise von den Melkrobotern umgebenen Wartebereich weisen und
- wobei die Tiertreibereinheit ein in den Wartebereich hineinragendes und insbesondere vom Zugang des Wartebereichs in diesen hineinragendes, feststehendes Führungselement und ein dieses durchdringendes, kreisend bewegbares Treiberelement aufweist.

Die obige Aufgabe wird ferner gemäß einer anderen Variante erfindungsgemäß gelöst durch ein Verfahren zum zeitlich vorgebbaren Melken von Flüssigkeit aus Eutern abgebenden Tieren einer Herde, insbesondere von Kühen, bei dem
- mehrere auf einem Untergrund längs einer zumindest Teilkreislinie angeordnete Melkroboter bereitgestellt werden, von denen jeder einen Eingang, einen Ausgang und ein automatisch an das Euter eines Tieres ansetzbares Melkzeug aufweist,
- die zu melkenden Tiere der Herde einem den Eingängen der Melkroboter vorgelagerten, eingegrenzten Wartebereich zugeführt werden in dem die Tiere aus einem Aufenthaltsbereich aus gelangen, in dem sich auch nicht zu melkende Tiere befinden, und
- die sich im Wartebereich aufhaltenden Tiere mittels einer automatischen kreisend bewegbaren Tiertreibereinheit nach und nach zu den Eingängen von jeweils frei werdenden Melkrobotern getrieben werden.

Sinngemäß wird also mit der Erfindung der gleichzeitige Einsatz mit mehreren Melkrobotern zum automatischen Melken der Tiere einer Herde vorgeschlagen, wobei diese Tiere "manuell" oder automatisch zu den Melkrobotern geführt werden. Dies kann beispielsweise am Tag zweimal (z.B. morgens und abends) oder dreimal erfolgen. Die Melkroboter verfügen jeweils über einen Eingang, durch den das Tier die Melkstation betritt, über Zitzenbecher, die dann, wenn sich das Tier im/am Melkroboter befindet, automatisch an das Euter des Tiers angesetzt werden, und über einen Ausgang, über den das gemolkene Tier den Melkroboter verlässt bzw. sich von diesem entfernt. Selbstverständlich kann der Melkroboter noch weitere technische Einrichtungen wie zum Bespiel eine Futtergabe und Reinigungseinrichtungen für das Euter aufweisen, die aber im Rahmen der Erfindung nicht notwendigerweise erforderlich sind.

Nach der Erfindung ist der Gruppe von Melkrobotern ein Wartebereich vorgelagert, der örtlich eingegrenzt ist und in dem sich die noch zu melkende Tiere einer Herde aufhalten, während in den Melkrobotern Tiere gemolken werden. Die zu melkenden Tiere der Herde werden manuell oder automatisch in den Warteraum geführt, und zwar z.B. durch ein oder mehrere Personen. Sobald sich die Tiere in dem eingegrenzten Wartebereich befinden, werden sie von dort aus durch eine automatische Tiertreibereinheit nach und nach zu frei werdenden Melkrobotern geführt.

Mit dem erfindungsgemäßen Konzept ist es also möglich, auf bequeme Art und Weise vollautomatisch zu vorgebbaren Zeiten die Kühe einer Herde zu melken.

Was die Größe des Wartebereichs betrifft, so kann diese Größe dadurch bestimmt werden, dass eine einmal dem Wartebereich zugeführte Kuh maximal eine vorgebbare Zeit (beispielsweise 1 Stunde) warten muss, um gemolken zu werden. Die Größe des Wartebereichs hängt also unter anderem auch von der Anzahl der eingesetzten Melkroboter und der Dauer des Melkzyklus pro Melkroboter ab.

In weiterer zweckmäßiger Ausgestaltung der Erfindung sind, wie bei Melkrobotern üblich, deren Ein- und Ausgänge jeweils wahlweise verschließbar.

Es existieren unterschiedliche konstruktive Umsetzungen für Tiertreibereinheiten. So ist es beispielsweise möglich, den Wartebereich im Wesentlichen rechteckförmig auszugestalten, wobei der Zugang zum Wartebereich auf der den Melkrobotern gegenüberliegenden Seite des Wartebereichs positioniert sein sollte. Die Tiertreibereinheit für einen derartigen Wartebereich umfasst dann ein Gatter oder eine Wand, das bzw. die ausgehend vom Zugang des Wartebereichs zu den Melkrobotern bewegbar ist. Ein gewisser Nachteil derartiger Konstruktionen ist, dass das Gatter bzw. die Wand, also das Treiberelement, dann, wenn es bis zu den Eingängen der Melkroboter vorbewegt ist und sämtliche Tiere gemolken bzw. die letzten Tiere noch in den Melkrobotern sind, zunächst zurückbewegt werden muss bis zum Zugang zum Wartebereich, um damit zum automatischen Treiben der nächsten Gruppe zu melkenden Kühen bereitsteht.

Wesentlich eleganter lässt sich eine Tiertreibereinheit dadurch realisieren, dass das Treiberelement um eine vertikale Drehachse einer Kreisfläche rotiert, und zwar umlaufend. Der Wartebereich ist nun einerseits durch den Umfang des Kreises und durch ein radial vom Zugang des Wartebereichs aus sich bis zum Mittelpunkt des Kreises erstreckendes, feststehendes Führungs-/ Abgrenzungselement definiert, mit dem das Treiberelement kämmt. Mit anderen Worten wird das Führungselement von dem Treiberelement bei dessen Rotationsbewegung durchdrungen. Hierzu können das Treiberelement und das Führungselement jeweils aus einzelnen vertikalen Stangen oder Pfosten bestehen, wobei die Stangen bzw. Pfosten des Treiberelements auf Lücke zu den Stangen bzw. Pfosten des Führungselements angeordnet sind. Derartige Systeme sind grundsätzlich bekannt.

Zweckmäßigerweise wird nun in Weiterbildung der Erfindung eine Tiertreibereinheit mit einem Treiberelement eingesetzt, das um den Mittelpunkt eines Kreises drehbar ist und sich zwischen dem Mittelpunkt des Kreises einerseits und dem Umfang des Kreises andererseits erstreckt. Die zu einer der beiden Seiten des Führungselements in den Wartebereich hineingeführten Kühe werden auf diese Weise durch das Treiberelement "im Kreis" getrieben und gelangen somit zu den längs des Umfangs des Kreises nebeneinander angeordneten Melkrobotern.

In weiterer vorteilhafter Ausgestaltung der Erfindung kann die Vorrichtung auf einem verfahrbaren Boden fest angeordnet sein, um beispielsweise in einer Weide verfahrbar platziert zu werden oder aber in einem Stall angeordnet zu werden. Alternativ ist es auch möglich, dass die Melkroboter fest auf einem Stallboden angeordnet sind; dementsprechend ist dann auch der Wartebereich im Stall fest angeordnet.

Die Erfindung ermöglicht es, Milchviehherden zu definierten Zeiten vollautomatisch (im Sinne eines automatischen Melksystems) zu melken und dabei eine praktische Auslastung der Melkstationen von 100% zu erzielen. Des Weiteren bleibt die Anlage flexibel auf eine mögliche Vergrößerung der Herde erweiterbar. Die erfindungsgemäße Vorrichtung lässt sich in einem Teilbereich eines Stalls anordnen, der neben dem Wartebereich mit Kuhtreibereinheit und den Melkrobotern einen Aufenthaltsbereich aufweist, in dem sich die Kühe befinden, wenn sie nicht gemolken werden (sollen).

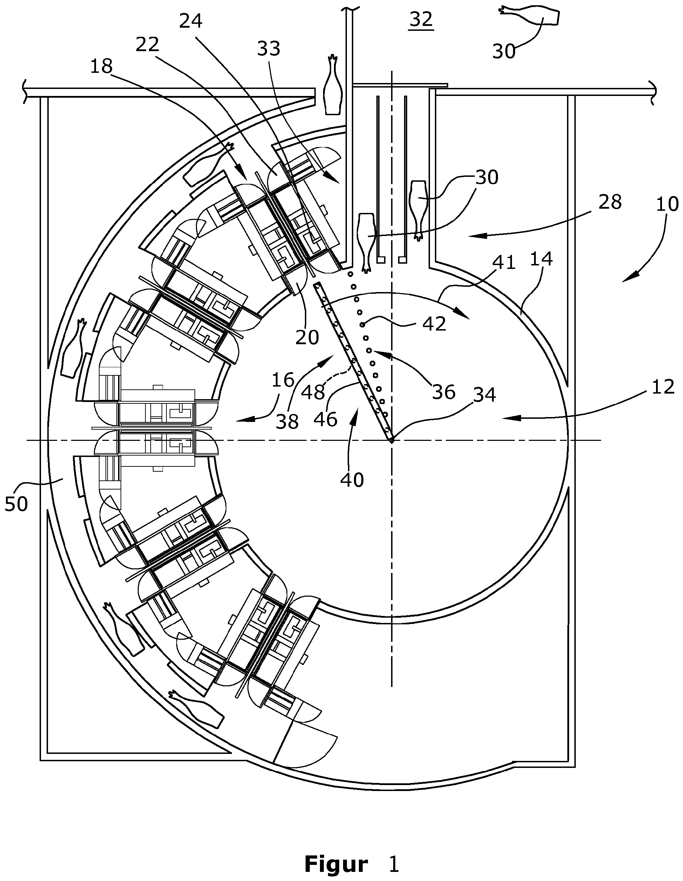

Die Erfindung wird nachfolgend anhand eines Ausführungsbeispiels sowie unter Bezugnahme auf die Zeichnung näher erläutert. In der Zeichnung ist in Draufsicht eine beispielhafte Anordnung einer Gruppe von in diesem Fall 10 Melkrobotern längs eines Teilabschnitts des Umfangs eines in Draufsicht kreisförmigen Wartebereichs gezeigt.

In der Zeichnung ist in Draufsicht eine Vorrichtung 10 zum automatischen Melken von Kühen zu vorgebbaren Zeiten gezeigt. Die Vorrichtung 10 umfasst einen in Draufsicht kreisflächenförmigen Wartebereich 12, der durch eine Wand oder ein Gatter 14, das entlang der Umfangslinie verläuft, eingegrenzt ist. In einem Abschnitt von in diesem Ausführungsbeispiel etwa 150° sind außerhalb des Wartebereichs 12 und an diesem angrenzend fünf Doppel-Melkroboteranordnungen 16 positioniert. Jeder Melkroboter 18 weist dabei einen wahlweise verschließbaren Eingang 20 und einen wahlweise verschließbaren Ausgang 22 auf. Ferner ist bei 24 pro Melkroboter 18 ein automatisch an das Euter der zu melkenden Kuh ansetzbares Melkzeug gezeigt.

Die Eingänge 20 sämtlicher Melkroboter 18 weisen zum Wartebereich 12 hin, wobei der Wartebereich 12 zwischen den Eingängen benachbarter Doppel-Melkroboteranordnungen 16 durch Gatterabschnitte 26 abgegrenzt ist.

Über einen Zugang 28 gelangen zu melkende Kühe 30 beispielsweise von einer Weide 32 in den Wartebereich 12.

Wie in der Zeichnung zu erkennen ist, erstreckt sich von der einen Seite 33 des Zugangs 28 in den Wartebereich 12 hinein bis zu dessen Zentrum 34 ein feststehendes Führungs-/Abgrenzungselement 36, das verhindert, dass die über den Zugang 28 in den Wartebereich 12 gelangenden Kühe 30 sogleich zu den nächstgelegenen Melkrobotern 18, die zu dieser Seite 33 des Zugangs 28 angeordnet sind, gelangen. Hierdurch wird die Herde gezwungen, die auf der Seite 33 des Zugangs 28 angeordneten Melkroboter 18 erst nach Durchschreiten des Warteberichs 12 zu erreichen zu können.

Damit nun die Kühe 30, die sich im Wartebereich 12 aufhalten, nach und nach die jeweils freiwerdenden Melkroboter 18 aufsuchen, dient eine Tiertreibereinheit 38, die nach Art eines um das Zentrum 34 drehbaren, rechenartigen Treiberelements 40 ausgebildet ist. Dieses Treiberelement 40 dreht sich in diesem Ausführungsbeispiel in Uhrzeigerrichtung 41, muss also bei seiner Drehbewegung das feststehende Führungselement 36 "durchdringen" können. Zu diesem Zweck ist das Führungselement 36 in Form einzelner vom Boden des Wartebereichs 12 aufragender Pfosten 42 ausgebildet, die in radialer Erstreckung nebeneinander angeordnet sind und einen solchen Abstand voneinander aufweisen, dass eine Kuh 30 den Bereich zwischen zwei benachbarten Pfosten 42 nicht passieren kann. Das Treiberelement 40 weist beispielsweise eine obenliegende Stange 46 auf, die im Zentrum 34 des Wartebereichs 12 und an dessen Umfangsbereich drehbar bzw. beweglich geführt ist und von der aus sich zum Boden des Wartebereichs hin ebenfalls Pfosten 48 erstrecken. Die Pfosten 48 weisen ebenfalls einen Abstand voneinander auf und sind auf Lücke zu den Pfosten 42 des Führungselements 36 angeordnet.

Andere Konstruktionen von Führungselement und Treiberelement sind ebenfalls denkbar.

Die Arbeitsweise der Vorrichtung 10 ist wie folgt.

Die zu melkenden Kühe einer Herde werden beispielsweise von der Weide über den Zugang 28 in den Wartebereich 12 geführt bzw. getrieben. Die dabei im vorderen Bereich sich befindenden Kühe 30 gelangen als erste in die Melkroboter 18, während die anderen Kühe zunächst im Wartebereich 12 warten müssen. Nachdem sich sämtliche zu melkenden Kühe im Wartebereich 12 befinden, werden diese durch Vorbewegung des Treiberelements 40 nach und nach in jeweils frei werdende Melkroboter 18 getrieben. Gemolkene Kühe 30 verlassen die Melkroboter 18 über deren Ausgänge 22, die, bezogen auf den kreisförmigen Wartebereich 12 radial auswärts weisen, wo die gemolkenen Kühe 30 in einen Gang 50 und über diesen zurück zur Weide 32 gelangen. Zu Beginn dieses Prozesses befindet sich also das Treiberelement 40 im bezogen auf die Draufsicht der Zeichnung ersten Quadranten I. Das Treiberelement 40 beendet seine Vortriebsbewegung in dem Augenblick, in dem es die jeweils letzten der wartenden, noch zu melkenden Kühe des Wartebereichs 12 kontaktiert. Dies kann z.B. durch eine entsprechende Sensorik oder aber mechanisch realisiert werden, indem durch ein Verschwenken des an den Kühen anliegenden Treiberelements 40 eine Antriebsrolle o.dgl. außer Eingriff mit einer Laufbahn, auf der sie normalerweise abrollt, gelangt.

### BEZUGSZEICHENLISTE

- 10: Vorrichtung
- 12: Wartebereich
- 14: Gatter
- 16: Doppel-Melkroboteranordnungen
- 18: Melkroboter
- 20: Eingang eines Melkroboters
- 22: Ausgang eines Melkroboters
- 24: Melkzeug eines Melkroboters
- 26: Gatterabschnitte zwischen Mekrobotern
- 28: Zugang zum Wartebereich
- 30: Kühe
- 32: Weide
- 33: eine Seite des Zugangs
- 34: Zentrum des Wartebereichs
- 36: Führungs-/Abgrenzungselement
- 38: Tiertreibereinheit
- 40: schwenkbares Treiberelement der Treibereinheit
- 41: Uhrzeigerrichtung
- 42: aufragender Pfosten des Führungs-/Abgrenzungselements
- 46: Stange des Treiberelements
- 48: Pfosten des Treiberelements
- 50: Gang

## Patentansprüche

1. Vorrichtung zum zeitlich vorgebbaren automatischen Melken einer Gruppe von Flüssigkeit aus Eutern abgebenden Tieren, insbesondere Kühen, einer mehrere Gruppen solcher Tiere aufweisenden Herde, mit
- mehreren, auf einem Untergrund angeordneten Melkrobotern (18) zum automatischem Melken von Tieren,
- wobei jeder Melkroboter (18) einen Eingang (20) und einen Ausgang (22) und ein automatisch an das Euter eines Tieres ansetzbares Melkzeug (24) aufweist,
- einem den Eingängen der Melkroboter (18) vorgelagerten, eingegrenzten Wartebereich (12) für die zu melkenden Tiere einer Herde,
- wobei der Wartebereich (12) einen Zugang (28) zum Zuführen einer Gruppe von zu melkenden Tieren aus einem Aufenthaltsbereich zum Wartebereich (12) aufweist, und
- einer Tiertreibereinheit (38) zum automatischen Treiben der sich im Wartebereich (12) aufhaltenden Tieren zu den Eingängen von jeweils frei werdenden Melkrobotern (18),
- wobei die Melkroboter (18) längs einer gekrümmten Linie, insbesondere einer zumindest Teilkreislinie, nebeneinander angeordnet sind,
- wobei die Eingänge der Melkroboter (18) zu dem zumindest teilweise von den Melkrobotern (18) umgebenen Wartebereich (12) weisen und
- wobei die Tiertreibereinheit (38) ein in den Wartebereich (12) hineinragendes und insbesondere vom Zugang (28) des Wartebereichs (12) in diesen hineinragendes, feststehendes Führungselement (36) und ein dieses durchdringendes, kreisend bewegbares Treiberelement (40) aufweist.

2. Vorrichtung nach Anspruch 1, **dadurch gekennzeichnet, dass** der Eingang (20) und/oder der Ausgang (22) jedes Melkroboters (18) wahlweise verschließbar ist/sind.

3. Vorrichtung nach Anspruch 1 oder 2, **dadurch gekennzeichnet, dass** der Untergrund ein Weideboden, ein Stallboden oder ein verfahrbarer Boden ist, auf dem die Melkroboter (18) angeordnet, insbesondere befestigt sind.

4. Verfahren zum zeitlich vorgebbaren Melken einer Gruppe von Flüssigkeit aus Eutern abgebenden Tieren, insbesondere Kühen, einer mehrere Gruppen solcher Tiere aufweisenden Herde mittels einer Vorrichtung nach einem der Ansprüche 1 bis 3, wobei bei dem Verfahren
- mehrere auf einem Untergrund längs einer zumindest Teilkreislinie angeordnete Melkroboter (18) bereitgestellt werden, von denen jeder einen Eingang (20), einen Ausgang (22) und ein automatisch an das Euter eines Tieres ansetzbares Melkzeug (24) aufweist,
- einer Gruppe von zu melkenden Tieren der Herde einem den Eingängen der Melkroboter (18) vorgelagerten, eingegrenzten Wartebereich (12) zugeführt werden, in dem die Tiere aus einem Aufenthaltsbereich aus gelangen, und
- die sich im Wartebereich (12) aufhaltenden Tiere mittels einer automatischen kreisend bewegbaren Tiertreibereinheit (38) nach und nach zu den Eingängen von jeweils frei werdenden Melkrobotern (18) getrieben werden.

## Claims

1. A device for temporally configurable automatic milking of a group of animals providing liquid from udders, in particular cows, of a herd comprising several groups of such animals, provided with
- a plurality of milking robots (18) arranged on a ground for automatic milking of animals,
- wherein each milking robot (18) comprises an entry (20) and an exit (22) and milking equipment (24) being automatically attachable to the udder of an animal,
- a closed waiting area (12) for the animals of a herd to be milked located before one of the entries of the milking robots (18),
- wherein the waiting area (12) comprises an entrance (28) for bringing a group of animals to be milked from a common area to the waiting area (12), and
- an animal guiding unit (38) for automatically guiding the animals in the waiting area (12) to the entries of respective milking robots (18) getting available,
- wherein the milking robots (18) are arranged next to each other along a curved line, in particular an at least partial circle line,
- wherein the entries of the milking robots (18) are directed towards the waiting area (12) which is at least partially surrounded by the milking robots (18), and
- wherein the animal guiding unit (38) comprises a fixed guiding element (36) protruding into the waiting area (12) and particularly protruding from the entrance (28) of the waiting area (12) into the waiting area (12), and a circularly movable guiding element (40) penetrating the guiding element (36).

2. The device according to claim 1, **characterized in that** the entry (20) and/or the exit (22) of each milking robot (18) is/are optionally closable.

3. The device according to claim 1 or 2, **characterized in that** the ground is pasture, a stable floor or a displaceable floor on which the milking robots (18) are arranged and particularly attached.

4. A method for temporally configurable milking of a group of animals providing liquid from udders, in particular cows, of a herd comprising several groups of such animals, by means of a device according to one of claim 1 to 3, wherein in this method
- a plurality of milking robots (18) are provided on a ground along at least a partial circle line, each of which comprises an entry (20), an exit (22) and milking equipment (24) being automatically attachable to the udder of an animal,
- a group of animals of the herd to be milked is guided to a closed waiting area (12) located before the entries of the milking robots (18) into which the animals get from a common area, and
- the animals in the waiting area (12) are guided by means of an automatic circularly movable animal guiding unit (38) one after the other to the entries of respective milking robots (18) getting available.

## Revendications

1. Dispositif destiné à la traite automatique, à des intervalles définissables, d'un groupe d'animaux dégageant du liquide par des pis, en particulier de vaches, d'un troupeau comportant plusieurs groupes de tels animaux, doté
- de plusieurs robots de traites (18) agencé sur un support afin de traire automatiquement les animaux,
- dans lequel chaque robot de traite (18) comporte une entrée (20) et une sortie (22) et un faisceau trayeur (24) pouvant être appliqué automatiquement sur le pis d'un animal,
- d'une zone d'attente (12) circonscrite, en amont des entrées du robot de traite (18), pour les animaux devant être traits d'un troupeau,
- dans lequel la zone d'attente (12) comporte un accès (28) pour conduire un groupe d'animaux à traire depuis une zone de séjour vers la zone d'attente (12), et
- d'une unité de conduite d'animaux (38) destinée à mener automatiquement les animaux séjournant dans la zone d'attente (12) aux entrées de robots de traite (18) respectivement en train de se libérer,
- dans lequel les robots de traite (18) sont agencés l'un à côté de l'autre le long d'une ligne courbe, en particulier d'une ligne au moins partiellement en arc de cercle,
- dans lequel les entrées des robots de traite (18) pointent vers la zone d'attente (12) entourée au moins partiellement par les robots de traite (12) et
- dans lequel l'unité de conduite d'animaux (38) comporte un élément de guidage (36) fixe pénétrant dans la zone d'attente (12) et en particulier depuis l'accès (28) de la zone d'attente (12) et un élément conducteur (40) traversant celui-ci et mobile circulairement.

2. Dispositif selon la revendication 1, **caractérisé en ce que** l'entrée (20) et/ou la sortie (22) de chaque robot de traite (18) sont sélectivement verrouillables.

3. Dispositif selon la revendication 1 ou 2, **caractérisé en ce que** le support est un sol de pré, d'étable ou carrossable, sur lequel les robots de traite (18) sont agencés, en particulier fixés.

4. Procédé destiné à la traite, à des intervalles définissables, d'un groupe d'animaux dégageant du liquide par des pis, en particulier de vaches, d'un troupeau comportant plusieurs groupes de tels animaux au moyen d'un dispositif selon l'une des revendications 1 à 3, dans lequel lors du procédé
- plusieurs robots de traite (18) sont préparés sur un support, agencés le long d'une ligne au moins partiellement en arc de cercle, desquels chacun possède une entrée (20), une sortie (22) et un faisceau trayeur (24) pouvant être appliqué automatiquement sur le pis d'un animal,
- un groupe d'animaux d'un troupeau devant être traits sont conduits à une zone d'attente (12) circonscrite, en amont des entrées du robot de traite (18), les animaux parvenant depuis une zone de séjour, et
- les animaux séjournant dans la zone d'attente (12) sont menés progressivement aux entrées de robots de traite (18) respectivement en train de se libérer au moyen d'une unité de conduite d'animaux (38) se déplaçant automatiquement de manière circulaire.
